# EUROPÄISCHE PATENTSCHRIFT

(11) **EP 1 817 962 B1**
(45) Veröffentlichungstag und Bekanntmachung des Hinweises auf die Patenterteilung: **02.11.2011**
(21) Anmeldenummer: 07002837.8
(22) Anmeldetag: 09.02.2007
(51) Int. Cl.: A22C 11/00, A22C 13/00

(54) **Nicht getrocknete Rohwurst in wasserdampfundurchlässiger Hülle**
Undried raw sausage in an skin impermeable to vapour
Saucisse non séchée dans une enveloppe imperméable à la vapeur dýeau

(30) Priorität: 09.02.2006 DE 102006006042
(43) Veröffentlichungstag der Anmeldung: 15.08.2007
(73) Patentinhaber: Wiberg GmbH, 5020 Salzburg (AT)
(72) Erfinder: Loidl, Anton, 4820 Bad Ischl (AT); Durmus, Claudia, Dr., 83457 Bayerisch Gmain (DE)
(74) Vertreter: Beyer, Andreas

(56) Entgegenhaltungen:
- EP-A1- 0 709 030
- WO-A-2004/098298
- DE-A1- 1 492 597
- DE-A1- 3 446 829
- WIBERG: "Weihnachtliche Huellen", Der Metzgermeister 44/2006 , 2006, [retrieved on 2009-12-03]

## Beschreibung

Die vorliegende Erfindung betrifft eine Rohwurst mit einer wasserdampfundurchlässigen Hülle sowie ein Verfahren zur Herstellung derselben.

Eine Rohwurst ist ein Wursttyp, der aus rohem, d.h. nicht erhitztem Fleisch, besteht. Bei der Herstellung wird das in wasserdampfdurchlässige Wursthüllen abgefüllte Rohwurstbrät einer Reifung durch Mikroorganismen, wie Bakterien oder Hefen, unterzogen, wodurch die Rohwurst haltbar wird und ihren typischen Geschmack erhält. Beispiele für Rohwürste sind Kulen, Salami, Salsiz, Salametti, Zervelatwurst, etc.

Neben der Rohwurst gibt es als weitere Wursttypen die Brühwurst und die Kochwurst. Brühwurst ist eine Sammelbezeichnung für Wurstarten, die bei der Herstellung durch Brühen oder Garen auf eine Kerntemperatur von etwa 72 °C erhitzt werden. Bei der Herstellung von Brühwürsten wird üblicherweise eine wasserdampfundurchlässige Wursthülle verwendet, die es ermöglicht, Feuchtigkeit und Wasser in der Wurst zu binden, um eine knackige, saftige Konsistenz zu erreichen. Zu den Brühwürsten gehören Wiener und Frankfurter Würstchen, alle Arten von Fleischwurst mit oder ohne Einlage, wie Mortadella, Jagdwurst, Bierwurst und Lyoner, sowie Leberkäse.

Die Kochwurst ist dagegen eine Wurst, die aus vorgekochtem und zerkleinertem Fleisch hergestellt wird und dann erneut gekocht wird. Typische Kochwürste sind Blut-, Leber- und Sülzwurst.

Die Herstellung von Rohwurst ist ein kompliziertes Verfahren, das ein hohes Maß an handwerklichem Können, viel Erfahrung und Aufmerksamkeit erfordert. Dabei wird das Rohfleisch inkl. Speck zunächst unter Zugabe von Kochsalz oder anderen technologisch wirksamen Salzen, wie Nitritpökelsalz, und Gewürzen mittels Wolfen und/oder Kuttern zerkleinert bis die gewünschte Körnung erreicht ist und die dabei entstehende homogene Wurstmasse (Brät) wird dann in Wursthüllen abgefüllt.

Die Wursthüllen, die bei der Herstellung von Rohwürsten verwendet werden sind im Allgemeinen atmungsaktive, wasser- und dampfdurchlässige sowie elastische Wursthüllen, da die Rohwürste im Laufe der Reifung Wasser abgeben und schrumpfen (sog. Abtrocknung). Für die Herstellung streichfähiger Rohwürste ist jedoch auch die Verwendung von wasserdampfundurchlässigen Hüllen bekannt. Die DE 1492 597 beschreibt beispielsweise Streichwürste, nämlich Teewurst und Mettwurst, die eine undurchlässige Kunststoffhülle aufweisen, sowie eine Mettwurst mit einer derartigen, jedoch mit Löchern von 0,2 mm Durchmesser versehenen Kunststoffhülle.

Nach dem Abfüllen wird die Rohwurst einem empfindlichen Reifungsprozess, der das Fermentieren des Rohwurstbräts mit Hilfe verschiedener Mikroorganismen umfasst, unterzogen. Die Reifung dient der Ausschaltung pathogener und verderbniserregender Mikroorganismen, der Ausbildung der typischen roten Farbe (Umrötung), der Ausbildung der Schnittfestigkeit, der Erzielung der Haltbarkeit, sowie der Ausbildung des typischen Fermentationsgeschmacks.

Bei der Reifung spielen die eingesetzten Mikroorganismen eine entscheidende Rolle. Diese können ubiquitär in der natürlichen Flora der Rohwurst enthalten sein (sog. Spontanflora oder Hausflora). Meist werden allerdings definierte, gezüchtete Reinkulturen von Bakterien, sogenannte Starterkulturen, verwendet. Diese Starterkulturen tragen zur weitgehenden Vermeidung von Fehlprodukten, zur gleichbleibenden sensorischen Qualität und insbesondere zur Gewährleistung der hygienischen Sicherheit bei.

Als Starterkulturen bei der Rohwurstherstellung werden hauptsächlich verschiedene Milchsäurebakterien, Mikrokokken/Staphylokokken, Hefen sowie Mischungen davon eingesetzt. Die Milchsäurebakterien bauen die Zuckerstoffe zu Milchsäure ab und führen so zu einer deutlichen pH-Wert-Senkung in der Rohwurst. Dieser Säuerungsprozess kann durch die Zugabe von Säuerungsmitteln, insbesondere Glucono-delta-lacton (GdL), beschleunigt werden. So wird das Wachstum unerwünschter Bakterien gehemmt und die Rohwurst stabilisiert. Weiterhin kommt es durch die pH-Wert-Absenkung zu einer Abnahme des Wasserbindungsvermögens. Dies begünstigt die Abtrocknung der Rohwurst. Die Mikro- und Staphylokokken bauen Nitrat zu Nitrit ab und sind maßgeblich an der Aromabildung beteiligt, während Hefen vor allem für eine spezielle Aromatisierung von luftgetrockneter Rohwurst eingesetzt werden.

Die Reifung der Rohwürste erfolgt im Allgemeinen in klimatisierten Räumen bei einer Reifungstemperatur von 15 °C bis 30°C und einer definierten relativen Luftfeuchtigkeit. Bei der Herstellung von abgetrockneten Rohwürsten liegt die relative Luftfeuchtigkeit dabei üblicherweise 3 bis 5% unter dem korrespondierenden Wert für das freie, ungebundene Wasser in der Wurst (sog. a_{W}-Wert). Der Anteil an freiem Wasser liegt im Rohwurstbrät nach der Herstellung in der Regel bei einem a_{W}-Wert von ca. 0,96, das entspricht einer Luftfeuchtigkeit von 96%. Dementsprechend beträgt die relative Luftfeuchtigkeit zu Beginn der Klimatisierung vorzugsweise zwischen 91 und 93%. Um die Haltbarkeit ohne Kühlung zu erreichen, liegen die a_{W}-Werte bei Fertigstellung üblicherweise im Bereich zwischen 0,65 und 0,90.

Das oben beschriebene herkömmliche Reifungsverfahren von Rohwürsten ist ein kompliziertes Verfahren, das viele Arbeits- und Überwachungsschritte erfordert. Wegen der Steuerung der relativen Luftfeuchtigkeit ist bei der Herstellung von abgebundenen Rohwürsten, d.h. typischerweise schnittfesten Rohwürsten, zudem ein klimatisierter Raum erforderlich. Dies bringt nicht nur hohe Investitionskosten, sondern auch erhebliche Unterhalts- und Betriebskosten mit sich. Ferner ist die Reifung ein langwieriger Prozess, der je nach Rohwurstart einige Monate dauern kann. Augrund der vielen Parameter, welche die Reifung beeinflussen, ist es des Weiteren schwierig, eine gleichbleibende, standardisierbare Qualität beizubehalten. Schließlich ist das Auftreten von unerwünschtem Oberflächenschimmel auf der Rohwurst ein nicht zu unterschätzendes Problem bei der herkömmlichen Herstellung von Rohwurst, insbesondere bei der Verwendung von wasserdampfdurchlässigen Hüllen in der Herstellung von schnittfesten bzw. abgebundenen Rohwürsten.

Es ist daher eine Aufgabe der vorliegenden Erfindung, ein Verfahren zur Herstellung einer schnittfesten Rohwurst bereitzustellen, das einfach, zeitsparend und kostengünstig ist und zu einer standardisierten, qualitativ hochwertigen Rohwurst führt.

Diese Aufgabe wird durch die in den Ansprüchen 1 und 9 angegebene technische Lehre gelöst. Vorteilhafte Ausführungsformen ergeben sich aus den Unteransprüchen.

Demnach ist ein erster Gegenstand der vorliegenden Erfindung eine schnittfeste Rohwurst, die eine wasserdampfundurchlässige Hülle aufweist. Eine solche erfindungsgemäße Rohwurst ist nicht abgetrocknet. Sie ist jedoch abgebunden. Die Rohwürste der vorliegenden Erfindung sind somit insbesondere keine Mett- oder Teewürste, da es sich dabei um streichfähige und nicht abgebundene Rohwürste handelt.

Aufgrund der Verwendung einer bislang in Zusammenhang mit schnittfesten Rohwürsten völlig unüblichen wasserdampfundurchlässigen Hülle spielt die Luftfeuchtigkeit der Umgebung bei der Reifung der erfindungsgemäßen Rohwurst keine Rolle mehr. Dadurch kann auf einen aufwändigen und teuren klimatisierten Raum verzichtet werden. Zur Reifung der erfindungsgemäßen Rohwurst ist lediglich ein Raum mit einer einfachen Temperatursteuerung erforderlich. Ferner ergeben sich bei der Reifung der erfindungsgemäßen Rohwurst mit einer wasserdampfundurchlässigen Hülle keine Gewichtsverluste und eine deutlich höhere Produktausbeute. Zudem können mikrobielle Einflüsse von außen vermieden werden, so dass kein Oberflächenschimmel oder Hefen auf der Rohwurst auftreten. Die Bildung von unerwünschtem Oberflächenschimmel stellt, bei jeder industriellen oder handwerklichen Salamiherstellung ein großes Problem dar. Aus der Tatsache, dass auf der Oberfläche einer wasserdampfundurchlässigen Hülle keine Fremdoberflächenschimmel wachsen können, ergibt sich ein deutlich geringerer Produktionsausfall. Des Weiteren ist die Reifung in 7 bis 20 Tagen abgeschlossen und damit verhältnismäßig kurz. Aufgrund der Einfachheit und guten Kontrollierbarkeit des Reifungsverfahrens der erfindungsgemäßen Rohwurst kann eine konstante,
hohe Qualität der Rohwurst sichergestellt werden. Ferner sind die Herstellungskosten der erfindungsgemäßen Rohwurst aufgrund des Verzichts auf einen klimatisierten Raum, der Zeitersparnis während der Reifung und der Produktionsvereinfachung erheblich verringert.

Die im Rahmen der Erfindung verwendete Hülle kann irgendeine für die Herstellung von Wurstwaren zugelassene Hülle sein, solange diese wasserdampfundurchlässig ist. Die Hülle kann beispielsweise eine Polyamidhülle, eine Mehrschichthülle, ein Faserdarm mit Innen- oder Außenbeschichtung oder eine wasserdampfundurchlässige, zu einem Schlauch geformte und verschweißte Folie, etc. sein. Vorzugsweise ist die Hülle eine Kunststoffhülle, insbesondere eine Kunststoffhülle mit mehrschichtigem Aufbau. Eine besonders bevorzugte Hülle ist der Safe-Triple-N-Darm (WIBERG GmbH) in unterschiedlichen Kalibern, der hohe Barrierewerte und eine hohe mechanische Stabilität aufweist.

Die wasserdampfundurchlässige Hülle der erfindungsgemäßen Rohwurst umgibt ein Rohbrät, das gemäß einer Ausführungsform der vorliegenden Erfindung Rohfleisch und eine funktionelle Zutatenmischung umfasst. In der Rohwurst liegt das Rohfleisch bzw. die Rohfleischmischung in Form einer fein zerkleinerten Masse vor, die mit den weiteren Bestandteilen, wie der funktionellen Zutatenmischung, einem Pökelstoff, z.B. Nitritpökelsalz, Salzen und einer Starterkultur, homogen vermischt ist.

Das Rohfleisch ist aus der Gruppe bestehend aus Rindfleisch, Kalbfleisch, Schweinefleisch, Lammfleisch, Wild- und Geflügelfleisch oder Mischungen davon ausgewählt. Das Rohfleisch beinhaltet insbesondere auch Speck, der für den Geschmack und die Konsistenz des fertigen Rohwurstprodukts wichtig ist. Bevorzugt ist eine Mischung aus Speck, Schweine- und Rindfleisch. Eine besonders beliebte in der erfindungsgemäßen Rohwurst enthaltene Rohfleischmasse wird aus 20 Gew.-% Rindfleisch (II, 3 mm, frisch), 30 Gew.-% Speck, 25 Gew.-% Schweinefleisch (II, tiefgekühlt) und 25 Gew.-% Rindfleisch (II, tiefgekühlt) hergestellt, wobei die Herstellung ausschließlich mit oder gänzlich ohne Tiefkühlware, in feiner oder grober Konsistenz, erfolgen kann.

Die genaue Zusammensetzung der funktionellen Zutatenmischung spielt bei der Herstellung der erfindungsgemäßen Rohwurst, insbesondere im Hinblick auf die Reifung und die Geschmacksbildung, eine wichtige Rolle, indem sie dafür sorgt, dass die Feuchtigkeit, die bei der konventionellen Herstellung von Rohwürsten im wasserdampfdurchlässigen Darm abgegeben werden muss, in der erfindungsgemäßen Rohwurst funktional und mikrobiologisch stabil gebunden ist.

Gemäß der Erfindung enthält die funktionelle Zutatenmischung einen oder mehrere Bestandteile ausgewählt aus der Gruppe bestehend aus Maltodextrin, Glucose, Saccharose, Lactose, Natriumascorbat, Oligofructose, Erbsenfasern, Rinderprotein, Schweineprotein, Glucono-delta-lacton, pflanzlichen Eiweißen, Kaliumnitrat und Transglutaminase.

Eine besonders bevorzugte funktionelle Zutatenmischung umfasst pro Kilogramm Fleisch und gegebenenfalls Speck 0,2 bis 10 g/kg, insbesondere 1 bis 3 g/kg, Maltodextrin, 0,2 bis 10 g/kg, insbesondere 1 bis 3 g/kg, Glucose oder Saccharose, 0,2 bis 10 g/kg, insbesondere 1 bis 3 g/kg, Lactose, 0,05 bis 2 g/kg, insbesondere 0,1 bis 0,5 g/kg, Natriumascorbat, und gegebenenfalls einen oder mehrere weitere Bestandteile ausgewählt aus der Gruppe bestehend aus 0 bis 30 g/kg Oligofructose, 0 bis 50 g/kg Erbsenfasern, 0 bis 30 g/kg Rinderprotein, 0 bis 30 g/kg Schweineprotein, sowie Glucono-delta-lacton, pflanzliche Eiweiße, Kaliumnitrat, Transglutaminase und geschmacksgebende Komponenten, wie Speisewürze, Gewürze, Knoblauchpulver, Pfefferöl, Bratzwiebelpulver, Pfeffer, Aromastoffe, Raucharoma, Glutamat etc., in üblichen Zugabemengen.

Zudem umfasst die erfindungsgemäße Rohwurst vorzugsweise 20 bis 35 g/kg, insbesondere 20 bis 30 g/kg, Nitritpökelsalz.

Gemäß einer bevorzugten Ausführungsform der vorliegender Erfindung umfasst die erfindungsgemäße Rohwurst ferner eine Starterkultur. Durch eine solche Zugabe von Starterkulturen wird der Reifungsprozess besser kontrolliert und pathogene und verderbniserregende Mikroorganismen werden ausgeschaltet.

Vorzugsweise umfasst die Starterkultur wenigstens einen Vertreter der Gattung Milchsäurebakterien und wenigstens einen Vertreter der Gattung Mikrokokken/Staphylokokken. Besonders bevorzugt umfasst die Starterkultur das Milchsäurebakterium *Pediococcus pentosaceus, Lactobacillus sakei* oder *Lactobacillus curvatur* und den Mikrokokkus/Staphylokokkus *Staphylococcus carnosus, Staphylococcus xylosus oder Kokuria varians.*

Ein weiterer Gegenstand der vorliegenden Erfindung betrifft ein Verfahren zur Herstellung einer schnittfesten Rohwurst, umfassend die Schritte
(a) Erzeugen von Rohbrät durch Zerkleinern eines Rohfleischausgangsmaterials und Mischen mit einer funktionellen Zutatenmischung und gegebenenfalls einer Starterkultur und einem Pökelstoff,
(b) Befüllen einer wasserdampfundurchlässigen Hülle mit dem aus Schritt (a) erhaltenen Rohbrät, und
(c) Reifen des Rohbräts aus Schritt (b).

Im Schritt (a) wird das Rohfleischausgangsmaterial, das aus den oben genannten Fleischsorten ausgewählt ist und vorzugsweise eine Mischung aus verschiedenen Fleischsorten ist, gegebenenfalls zunächst von Hand grob zerkleinert und dann unter Verwendung von im Stand der Technik gut bekannten Verfahren, beispielsweise Wolfen und/oder Kuttern, zerkleinert. Die Herstellung mit dem Fleischwolf erfolgt typischerweise bei reinen Schweinefleischrezepturen mit grober Körnung. Bei der Verarbeitung im Kutter wird das einzusetzende Rohfleisch, das vorzugsweise Speck umfasst, und die oben beschriebene Gewürze und Zucker enthaltende funktionelle Zutatenmischung stark zerkleinert und gleichzeitig miteinander gemischt, wodurch eine feine, gleichmäßige Rohwurstmasse erzeugt wird. Bei der Verarbeitung im Kutter wird vorzugsweise wenigstens ein Teil des Fleisches, einschließlich dem Speck, im gefrorenen Zustand verarbeitet. In diesem Fall wird zuerst das gefrorene Fleisch in den Kutter gegeben und anschließend das gekühlte Fleisch und die weiteren Bestandteile mittels des Kutters zerkleinert und gleichzeitig gemischt. Der Zerkleinerungsgrad ist abhängig von der gewünschten Körnung des Rohwurstendprodukts, wobei der gefrorene Fleischanteil im Allgemeinen stärker zerkleinert wird als der lediglich gekühlte, da der gekühlte Anteil vorzugsweise später - vor oder zusammen mit dem gefrorenen Speck - zugegeben wird.

Vorzugsweise werden in Schritt (a) des erfindungsgemäßen Verfahrens die funktionelle Zutatenmischung und das zu verarbeitende Rohfleischausgangsmaterial zusammen zerkleinert/gemischt. Es ist jedoch auch möglich, dass die funktionelle Zutatenmischung erst nach einem ersten Zerkleinern/Mischen des Rohfleisches zugegeben wird. Ferner ist es gemäß der vorliegenden Erfindung bevorzugt, dass das in der funktionellen Zutatenmischung enthaltene Salz erst kurz vor dem Ende des Zerkleinerns/Mischens des Schrittes (a) des erfindungsgemäßen Verfahrens zugegeben wird.

Ferner sieht die vorliegende Erfindung vor, dass dem zu verarbeitenden Rohfleischausgangsmaterial auch ein Pökelstoff, wie Nitritpökelsalz, zugegeben werden kann. Üblicherweise werden in der vorliegenden Erfindung pro Kilogramm Fleisch, einschließlich Speck, 20 bis 35 g/kg, insbesondere 20 bis 30 g/kg, Nitritpökelsalz zugegeben, wodurch das Wachstum von unerwünschten und gegebenenfalls pathogenen Bakterien gehemmt und die Fettstabilität für ein längerer Zeitraum gewährleistet wird. Es ist im Rahmen der Erfindung auch möglich, ohne Nachteil für die Farbe, das Aroma und die Fettstabilität, den Pökelsalzanteil bis zu 50% durch Kochsalz zu ersetzen.

In einer bevorzugten Ausführungsform der vorliegenden Erfindung wird dem zu verarbeitenden Rohfleischausgangsmaterial eine Starterkultur zugesetzt. Vorzugsweise wird dabei das Rohfleischausgangsmaterial mit der funktionellen Zutatenmischung und der Starterkultur gemischt und gleichzeitig zerkleinert.

Die im Rahmen der vorliegenden Erfindung verwendeten Starterkulturen müssen aufgrund der Tatsache, dass bei der Reifung des Rohwurstbräts durch die Verwendung von wasserdampfundurchlässigen Hüllen anaerobe Bedingungen entstehen, besondere Wachstumseigenschaften aufweisen und entsprechend ausgewählt und aufeinander abgestimmt sein. Gemäß der Erfindung umfasst die verwendete Starterkultur deshalb, gegebenenfalls neben weiteren eingesetzten Mikroorganismen, vorzugsweise wenigstens eine Milchsäurebakterienart und/oder wenigstens eine Nitratreduzierende Mikrokokkenart. Bevorzugt wird eine Mischung aus wenigstens einer Milchsäurebakterienart und wenigstens einer Mikrokokkenart verwendet. Ein besonders bevorzugtes Milchsäurebakterium ist *Pediococcus pentosaceus, Lactobacillus sakei* oder *Lactobacillus curvatur* und besonders bevorzugte Mikrokokken sind *Staphylococcus carnosus, Staphylococcus xylosus und Kokuria varians* Für 1 kg Fleisch, einschließlich Speck, werden in einer besonders bevorzugten Ausführungsform 0,5 g einer Kulturenmischung, bestehend aus 10⁸ bis 10¹¹ Kolonien bildenden Einheiten (KBE)/g, insbesondere 5,0 x 10⁹ KBE/g, der Milchsäure bildenden Art *Pediococcus pentosaceus, Lactobacillus sakei* oder *Lactobacillus curvatus* und 10⁸ bis 10¹¹ KBE/g, insbesondere 7,0 x 10⁹ KBE/g, der Nitrat-reduzierenden Art *Staphylococcus carnosus, Staphylococcus xylosus* oder *Kokuria varians* eingesetzt.

Im Schritt (b) des erfindungsgemäßen Verfahrens wird eine oben beschriebene wasserdampfundurchlässige Hülle mit dem aus Schritt (a) erhaltenen Rohbrät befüllt. Die für eine schonende Abfüllung erforderlichen technischen Maßnahmen und Verfahrensparameter, wie beispielsweise die Abfülltemperatur, sind einem Fachmann auf dem Gebiet der Rohwurstherstellung bekannt.

Im Schritt (c) des erfindungsgemäßen Verfahrens wird das aus Schritt (b) erhaltene Rohbrät in der wasserdampfundurchlässigen Hülle gereift. Bei der Reifung wird das rohbrät in der wasserdampfundurchlässigen Hülle unter geeigneten Bedingungen gelagert, wobei das Rohbrät durch die Starterkulturen fermentiert, d.h. gereift, wird.

Bei dem Reifeprozess findet durch die ausgewählten in der Starterkultur enthaltenen Mikroorganismen, insbesondere falls Milchsäurebakterien eingesetzt werden, oder durch Zugabe von Säuerungsmitteln (z.B. GdL) eine Senkung des pH-Werts der Rohwurst und, insbesondere falls Mikrokokken eingesetzt werden, eine Pökelung, d.h. Umrötung durch mikrobielle Reduktion des enthaltenen Nitrats zu Nitrit und weitere Reduktion zu Stickoxid statt. Darüber hinaus kommt es zu einer Reifung sowie einer Aromabildung durch mikrobiellen Eiweiß- und Fettabbau.

Weil im Gegensatz zur herkömmlichen Rohwurstherstellung nach dem erfindungsgemäßen Verfahren eine wasserdampfundurchlässige Hülle verwendet wird, findet bei dem Reifeprozess keine Abtrocknung und kein damit einhergehender Gewichtsverlust als bislang wesentliche Merkmale der Rohwurstherstellung statt. Dennoch wird durch das einfache und gut kontrollierbare erfindungsgemäße Verfahren ein stabiles, lagerfähiges, sicheres und schmackhaftes Rohwurstprodukt erhalten.

Die Reifungstemperatur beträgt vorzugsweise 10 bis 30°C, besonders bevorzugt 15 bis 30°C, insbesondere 20 bis 30°C und am meisten bevorzugt 22 bis 26°C. Um ein gutes Anwachsen der Starterkulturen sicherzustellen, kann die Temperatur am Anfang auch geringfügig über der für die weitere Reifung verwendeten Temperatur liegen. Die Reifungsdauer liegt abhängig von der herzustellenden erfindungsgemäßen Rohwurst vorzugsweise zwischen 7 und 20 Tagen, besonders bevorzugt zwischen 10 und 15 Tagen und am meisten bevorzugt zwischen 12 und 15 Tagen.

Die Reifungsdauer und/oder -temperatur wird bzw. werden vorzugsweise so gewählt, dass die zugesetzten Starterkulturen, falls diese Milchsäurebakterien umfassen, bis auf eine Milchsäurebakterien-Keimzahl (Bakterienzahl) von etwa 10⁶ bis 10⁸ pro Gramm der gereiften Rohwurst, und/oder, falls die Starterkultur Mikrokokken umfasst, bis auf eine Mikrokokken-Keimzahl von etwa 10³ bis 10⁵ wachsen.

Der pH-Wert der durch das erfindungsgemäße Verfahren erhaltenen Rohwurst beträgt nach der Reifung als Ergebnis der spezifischen Kombination der eingesetzten Starterkulturen, der Reifungstemperatur und -dauer, etc. vorzugsweise 4,5 bis 5,2.

Die vorliegende Erfindung wird durch das nachfolgende Beispiel einer bevorzugten Rezeptur für die Herstellung einer erfindungsgemäßen Rohwurst näher erläutert.

### Beispiel

Zur Herstellung von Rohwurstbrät mit einem Gesamtgewicht von 106,5 kg wurde Rohfleisch, nämlich

| | |
|---|---|
| 20 kg | Rindfleisch II, 3 mm, frisch |
| 30 kg | Schweinespeck |
| 25 kg | Schweinefleisch II, tiefgekühlt |
| 25 kg | Rindfleisch II, tiefgekühlt, |

und 2,8 kg Nitritpökelsalz (NPS) sowie 1,25 kg einer Gewürz- und Zuckermischung für Geschmack und Reifung, bestehend aus

| | |
|---|---|
| 150 g | Maltodextrin |
| 40 g | Speisewürze |
| 197 g | Dextrose |
| 40 g | Knoblauchpulver |
| 200 g | Lactose |
| 70 g | Mononatriumglutamat |
| 9 g | Pfefferextrakt |
| 10 g | Bratzwiebelpulver |
| 80 g | Pfeffer schwarz geschrotet |
| 25 g | Natriumascorbat |
| 140 g | Pfeffer, weiß, gemahlen |
| 100 g | Pfeffer, weiß, geschrotet |
| 30 g | Salamiaroma |
| 129 g | Speisesalz, |
| 30 g | Raucharoma |

und 50 g einer Starterkultur, die mindestens 2,5 x 10¹¹ Kolonien bildende Einheiten von *Pediococcus pentosaceus* und mindestens 3,5 x 10¹¹ Kolonien bildende Einheiten von *Staphylococcus carnosus* enthält, sowie 2,0 kg Schweineprotein und 0,4 kg Weizenfasern mittels eines Kutters zerkleinert/gemischt. Dann wurde das erhaltene Rohwurstbrät in einen Safe-Triple-N-Darm (Fa. WIBERG GmbH), Kaliber 60, gefüllt und bei einer Temperatur von 24,0 °C für 14 Tage gereift. Auf diese Art und Weise konnte ein Rohwurstprodukt mit einem pH-Wert von 4,76 und ausgezeichneten Eigenschaften hinsichtlich Geschmack, Konsistenz, Bisseigenschaften und Lagerfähigkeit hergestellt werden.

## Patentansprüche

1. Schnittfeste Rohwurst,
**gekennzeichnet durch** eine wasserdampfundurchlässige Hülle.

2. Schnittfeste Rohwurst nach Anspruch 1,
**dadurch gekennzeichnet, dass** die wasserdampfundurchlässige Hülle eine Kunststoffhülle mit mehrschichtigem Aufbau ist.

3. Schnittfeste Rohwurst nach Anspruch 1 oder 2,
**dadurch gekennzeichnet, dass** die wasserdampfundurchlässige Hülle ein Rohbrät umgibt, das Rohfleisch und eine funktionelle Zutatenmischung umfasst.

4. Schnittfeste Rohwurst nach Anspruch 3,
**dadurch gekennzeichnet, dass** das Rohbrät ferner eine Starterkultur umfasst.

5. Schnittfeste Rohwurst nach Anspruch 3 oder 4,
**dadurch gekennzeichnet, dass** das Rohbrät ferner einen Pökelstoff umfasst.

6. Schnittfeste Rohwurst nach einem der Ansprüche 1 bis 5,
**dadurch gekennzeichnet, dass** das Rohfleisch aus Rindfleisch, Kalbfleisch, Schweinefleisch, Lammfleisch, Wild- und Geflügelfleisch oder Mischungen davon ausgewählt ist.

7. Schnittfeste Rohwurst nach Anspruch 6,
**dadurch gekennzeichnet, dass** das Rohfleisch zusätzlich Speck beinhaltet.

8. Schnittfeste Rohwurst nach einem der Ansprüche 1 bis 7, **dadurch gekennzeiehnet, dass** die funktionelle Zutatenmischung einen oder mehrere Bestandteile ausgewählt aus der Gruppe bestehend aus Maltodextrin, Glucose, Saccharose, Lactose, Natriumascorbat, Oligofructose, Erbsenfasern, Rinderprotein, Schweineprotein, Glucono-delta-lacton, pflanzlichen Eiweißen, Kaliumnitrat und Transglutaminase umfasst.

9. Schnittfeste Rohwurst nach einem der Ansprüche 1 bis 8,
**dadurch gekennzeichnet, dass** die Starterkultur wenigstens eine Milchsäurebakterienart und wenigstens eine Mikrokokkenart umfasst.

10. Schnittfeste Rohwurst nach Anspruch 9,
**dadurch gekennzeichnet, dass** die Milchsäurebakterienart *Pediococcus pentosaceus, Lactobacillus sakei* oder *Lactobacillus* curvatus ist und die Mikrokokkenart *Staphylococcus camosus, Staphylococcus xylosus* oder *Kokuria varians* ist.

11. Verfahren zum Herstellen einer schnittfesten Rohwurst,
umfassend die Schritte:
(a) Erzeugen von Rohbrät durch Zerkleinem/Mischen eines Rohfleischausgangsmaterials und einer funktionellen Zutatenmischung und gegebenenfalls eine Starterkultur und einen Pökelstoff,
(b) Befüllen einer wasserdampfundurchlässigen Hülle mit dem aus Schritt (a) erhaltenen Rohbrät, und
(c) Reifen des Rohbräts aus Schritt (b).

12. Verfahren nach Anspruch 11,
**dadurch gekennzeichnet, dass** das Reifen in Schritt (c) durch Lagern erfolgt.

13. Verfahren nach Anspruch 12,
**dadurch gekennzeichnet, dass** das Lagern der Rohwurst für eine Zeitdauer von 7 bis 20 Tagen bei einer Temperatur von 10 bis 30 °C erfolgt.

14. Verfahren nach Anspruch 13,
**dadurch gekennzeichnet, dass** die Zeitdauer 10 bis 15 Tage und die Temperatur 22 bis 26 °C beträgt.

15. Verfahren nach einem der Ansprüche 11 bis 14,
**dadurch gekennzeichnet, dass** der pH-Wert der Rohwurst nach der Reifung 4,5 bis 5,2 beträgt.

16. Verfahren nach einem der Ansprüche 11 bis 15,
**dadurch gekennzeichnet, dass** die Starterkultur Milchsäurebakterien und Mikrokokken umfasst und die Milchsäurebakterien-Keimzahl nach der Reifung zwischen 10⁶ und 10⁸ pro g der gereiften Rohwurst und die Mikrokokken-Keimzahl zwischen 10³ und 10⁵ pro g der gereiften Rohwurst liegen.

## Claims

1. Cut-firm raw sausage,
**characterized by** a casing impermeable to water vapor.

2. Cut-firm raw sausage according to claim 1,
**characterized in that** the casing impermeable to water vapor is a plastic casing having a multi-layered structure.

3. Cut-firm raw sausage according to claims 1 or 2,
**characterized in that** the casing impermeable to water vapor encloses a raw sausage meat comprising raw meat and a functional ingredient mixture.

4. Cut-firm raw sausage according to claim 3,
**characterized in that** the raw sausage meat further comprises a starter culture.

5. Cut-firm raw sausage according to claims 3 or 4,
**characterized in that** the raw sausage meat further comprises a pickling substance.

6. Cut-firm raw sausage according to any one of claims 1 to 5,
**characterized in that** the raw meat is selected from beef, veal, pork, lamb, game and poultry meat or mixtures thereof.

7. Cut-firm raw sausage according to claim 6,
**characterized in that** the raw meat additionally comprises bacon.

8. Cut-firm raw sausage according to any one of claims 1 to 7,
**characterized in that** the functional ingredient mixture comprises one or more constituents selected from the group consisting of maltodextrin, glucose, saccharose, lactose, sodium ascorbate, oligofructose, pea fiber, bovine protein, porcine protein, glucono-delta-lactone, vegetable protein, potassium nitrate and transglutaminase.

9. Cut-firm raw sausage according to any one of claims 1 to 8,
**characterized in that** the starter culture comprises at least one type of lactic acid bacteria and at least one type of micrococci.

10. Cut-firm raw sausage according to claim 9,
**characterized in that** the lactic acid bacteria type is *pediococcus pentosaceus, lactobacillus sakei* or *lactobacillus curvatus* and the micrococci type is *staphylococcus carnosus, staphylococcus xylosus* or *kocuria varians.*

11. Method for producing a cut-firm raw sausage,
comprising the steps of:
(a) producing raw sausage meat by mincing/mixing a raw meat starting material and a functional ingredient mixture and, if applicable, a starter culture and a pickling substance,
(b) filling a casing impermeable to water vapor with the raw sausage meat obtained from step (a), and
(c) ripening the raw sausage meat from step (b).

12. Method according to claim 11,
**characterized in that** the ripening in step (c) is carried out by storing.

13. Method according to claim 12,
**characterized in that** the storing of the raw sausage takes place over a period of time of 7 to 20 days at a temperature of 10 to 30 °C.

14. Method according to claim 13,
**characterized in that** the period of time is 10 to 15 days and the temperature is 22 to 26 °C.

15. Method according to any one of claims 11 to 14,
**characterized in that** the ph-value of the raw sausage is 4.5 to 5.2 after ripening.

16. Method according to any one of claims 11 to 15,
**characterized in that** the starter culture comprises lactic acid bacteria and micrococci and, after ripening, the lactic acid bacteria germination index is between 10⁶ and 10⁸ per g of the ripened raw sausage and the micrococci germination index is between 10³ and 10⁵ per g of the ripened raw sausage.

## Revendications

1. Saucisse crue pouvant être coupée en tranches,
**caractérisée par** une enveloppe imperméable à la vapeur d'eau.

2. Saucisse crue pouvant être coupée en tranches selon la revendication 1,
**caractérisée en ce que** l'enveloppe imperméable à la vapeur d'eau est une enveloppe en matière plastique à couches multiples.

3. Saucisse crue pouvant être coupée en tranches selon la revendication 1 ou la revendication 2,
**caractérisée en ce que** l'enveloppe imperméable à la vapeur d'eau entoure une préparation de chair crue qui comprend de la viande crue et un mélange d'ingrédients fonctionnels.

4. Saucisse crue pouvant être coupée en tranches selon la revendication 3,
**caractérisée en ce que** la préparation de chair crue comprend, en outre une culture d'amorçage.

5. Saucisse crue pouvant être coupée en tranches selon la revendication 3 ou la revendication 4,
**caractérisée en ce que** la préparation de chair crue comprend en outre un agent de salaison.

6. Saucisse crue pouvant être coupée en tranches selon l'une des revendications 1 à 5,
**caractérisée en ce que** la viande crue est choisie parmi le boeuf, le veau, le porc, l'agneau, le gibier et les volailles ou des mélanges de celles-ci.

7. Saucisse crue pouvant être coupée en tranches selon la revendication 6,
**caractérisée en ce que** la viande crue contient, en outre, du lard.

8. Saucisse crue pouvant être coupée en tranches selon l'une des revendications 1 à 7,
**caractérisée en ce que** le mélange d'ingrédients fonctionnels comprend un ou plusieurs composants choisis parmi le groupe constitué par la maltodextrine, le glucose, la saccharose, le lactose, l'ascorbate de sodium, les oligofructoses, les fibres de pois, les protéines de boeuf, les protéines de porc, le glucono delta-lactone, les albumines végétales, le nitrate de potassium et la transglutaminase.

9. Saucisse crue pouvant être coupée en tranches selon l'une des revendications 1 à 8,
**caractérisée en ce que** la culture d'amorçage comprend au moins un type de bactérie lactique et au moins un type de microcoque.

10. Saucisse crue pouvant être coupée en tranches selon la revendication 9,
**caractérisée en ce que** le type de bactérie lactique est constitué par *pediococcus pentosaceus, lactobacillus sakei* ou *lactobacillus curvatus,* et le type de microcoque est constitué par *staphylococcus carnosus, staphylococcusxylosusou kocuria varians.*

11. Procédé pour la fabrication d'une saucisse crue pouvant être coupée en tranches, comprenant les étapes suivantes :
(a) production d'une préparation de chair crue par hachage/mélange d'une matière initiale de viande crue et d'un mélange d'ingrédients fonctionnels et, le cas échéant, d'une culture d'amorçage et d'un agent de salaison,
(b) remplissage d'une enveloppe imperméable à la vapeur d'eau avec la préparation de chair crue obtenue à l'étape (a), et
(c) maturation de la préparation de chair crue de l'étape (b).

12. Procédé selon la revendication 11,
**caractérisé en ce que** la maturation à l'étape (c) s'effectue par affinage par stockage.

13. Procédé selon la revendication 12,
**caractérisé en ce que** l'affinage par stockage de la saucisse crue s'effectue pendant une durée de 7 à 20 jours, à une température de 10 à 30 °C.

14. Procédé selon la revendication 13,
**caractérisé en ce que** la durée est de 10 à 15 jours et la température est de 22 à 26 °C.

15. Procédé selon l'une des revendications 11 à 14,
**caractérisé en ce que** la valeur du pH de la saucisse crue est de 4,5 à 5,2 après maturation.

16. Procédé selon l'une des revendications 11 à 15,
**caractérisé en ce que** la culture d'amorçage renferme des bactéries lactiques et des microcoques, et le nombre de germes des bactéries lactiques, après maturation, se situe entre 10⁶ et 10⁸ par gramme de la saucisse crue arrivée à maturité, et le nombre de germes des microcoques se situe entre 10³ et 10⁵ par gramme de la saucisse crue arrivée à maturité.
